(19)

Europäisches
Patentamt
European
Patent Office
Office européen
des brevets

(11) **EP 4 692 865 A1**

(12) **EUROPEAN PATENT APPLICATION**
published in accordance with Art. 153(4) EPC

(43) Date of publication:
**11.02.2026 Bulletin 2026/07**

(21) Application number: **24778692.4**

(22) Date of filing: **06.02.2024**

(51) International Patent Classification (IPC):
*G02B 5/00* (2006.01)  *B32B 3/26* (2006.01)
*B32B 3/30* (2006.01)  *B32B 7/023* (2019.01)
*F21V 5/00* (2018.01)  *F21V 5/04* (2006.01)
*G02B 3/06* (2006.01)  *G02B 5/02* (2006.01)
*G02B 1/118* (2015.01)  *G02B 3/00* (2006.01)
*G02B 5/04* (2006.01)  *G02B 5/18* (2006.01)
*G02B 5/32* (2006.01)

(52) Cooperative Patent Classification (CPC):
**B32B 3/26; B32B 3/30; B32B 7/023; F21V 5/00;
F21V 5/04; G02B 3/06; G02B 5/00; G02B 5/02;**
G02B 1/118; G02B 3/00; G02B 5/04; G02B 5/18;
G02B 5/32

(86) International application number:
**PCT/JP2024/003806**

(87) International publication number:
**WO 2024/202547 (03.10.2024 Gazette 2024/40)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **31.03.2023 JP 2023058427**

(71) Applicant: **Nitto Denko Corporation
Ibaraki-shi, Osaka 567-8680 (JP)**

(72) Inventors:
• YAGAMI, Takaaki
  Ibaraki-shi, Osaka 567-8680 (JP)
• HATTORI, Daisuke
  Ibaraki-shi, Osaka 567-8680 (JP)
• SATO, Keisuke
  Ibaraki-shi, Osaka 567-8680 (JP)

(74) Representative: **Hoffmann Eitle
Patent- und Rechtsanwälte PartmbB
Arabellastraße 30
81925 München (DE)**

(54) **LAMINATE AND METHOD FOR MANUFACTURING LAMINATE**

(57) To achieve both the protection of an optical functional layer having a convex surface and the suppression of a decrease in function of the optical functional layer, provided is a laminate including: an optical functional layer including a first main surface and a second main surface facing each other, the first main surface having protrusions formed thereon; and a low-refractive index layer formed on the first main surface side of the optical functional layer, the low-refractive index layer having a refractive index of 1.30 or less, wherein the laminate has voids formed between the optical functional layer and the low-refractive index layer.

FIG. 1

EP 4 692 865 A1

**Description**

Technical Field

The present invention relates to a laminate and a method of producing a laminate.

Background Art

A decorative film is used as means for improving the design properties of various products. For example, as disclosed in Patent Literatures 1 and 2, depending on applications, the decorative film includes an optical functional layer having a function of changing a direction of light in some cases. The optical functional layer having a function of changing a direction of light typically has a convex surface as a surface thereof.

Citation List

Patent Literature

[PTL 1] JP 2020-028981 A
[PTL 2] JP 2020-104467 A

Summary of Invention

Technical Problem

When an attempt is made to protect the convex surface of the above-mentioned optical functional layer with, for example, a pressure-sensitive adhesive, the function of the optical functional layer may be decreased or lost.
The present invention has been made to solve the above-mentioned problem, and a primary object of the present invention is to provide a laminate that can achieve both the protection of an optical functional layer having a convex surface and the suppression of a decrease in function of the optical functional layer.

Solution to Problem

1. According to an embodiment of the present invention, there is provided a laminate including: an optical functional layer including a first main surface and a second main surface facing each other, the first main surface having protrusions formed thereon; and a low-refractive index layer formed on a first main surface side of the optical functional layer, the low-refractive index layer having a refractive index of 1.30 or less, wherein the laminate has voids formed between the optical functional layer and the low-refractive index layer.

2. In the laminate according to the above-mentioned item 1, the protrusions may each have an apex.

3. In the laminate according to the above-mentioned item 1 or 2, a ratio of a height of each of the voids to a height of each of the protrusions may be 10% or more.

4. In the laminate according to any one of the above-mentioned items 1 to 3, the low-refractive index layer may be directly in contact with the first main surface of the optical functional layer.

5. In the laminate according to any one of the above-mentioned items 1 to 4, the protrusions may each have a height of from 10 nm to 100 $\mu$m.

6. In the laminate according to any one of the above-mentioned items 1 to 5, the protrusions may have a pitch of from 1 $\mu$m to 1,000 $\mu$m.

7. In the laminate according to any one of the above-mentioned items 1 to 6, the low-refractive index layer may be a porous layer formed of a porous body.

8. The laminate according to any one of the above-mentioned items 1 to 7 may include the optical functional layer, the low-refractive index layer, and a first pressure-sensitive adhesive layer in the stated order.

9. The laminate according to any one of the above-mentioned items 1 to 8 may include a second pressure-sensitive adhesive layer, the optical functional layer, and the low-refractive index layer in the stated order.

10. According to an embodiment of the present invention, there is provided a method of producing a laminate, including: preparing an optical functional layer including a first main surface and a second main surface facing each other, the first main surface having protrusions formed thereon; forming a coating film of a material for forming a low-refractive index layer on the first main surface of the optical functional layer; and heating the coating film to form a low-refractive index layer having a refractive index of 1.30 or less, wherein the heating forms voids between the optical functional layer and the low-refractive index layer.

Advantageous Effects of Invention

According to the embodiment of the present invention, it is possible to achieve both the protection of the optical functional layer having the convex surface and the suppression of a decrease in function of the optical functional layer.

Brief Description of Drawings

FIG. **1** is a schematic sectional view for illustrating a schematic configuration of a laminate according to one embodiment of the present invention.

FIG. **2** is a view for illustrating an optical functional layer included in the laminate illustrated in FIG. **1.**

Description of Embodiments

Embodiments of the present invention are described below with reference to the drawings. However, the present invention is not limited to these embodiments. For clearer illustration, some widths, thicknesses, shapes, and the like of respective portions may be schematically illustrated in the drawings in comparison to the embodiments. However, the widths, the thicknesses, the shapes, and the like are each merely an example, and do not limit the understanding of the present invention. In addition, in the drawings, the same or similar components are denoted by the same reference symbols, and repetitive description thereof may be omitted.

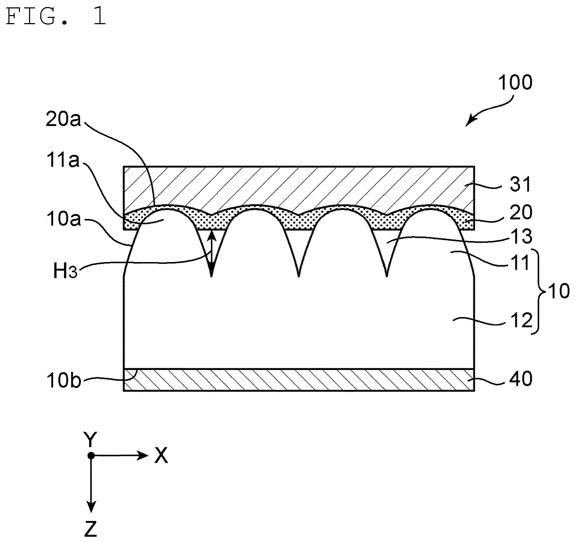

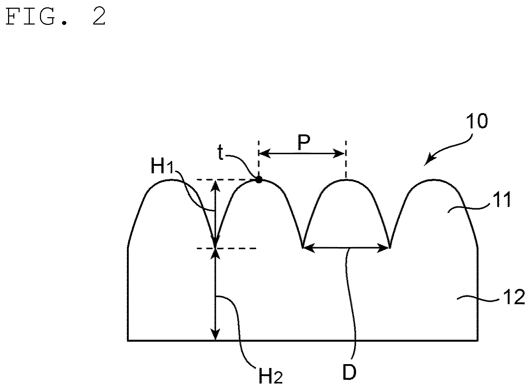

FIG. **1** is a schematic sectional view for illustrating a schematic configuration of a laminate according to one embodiment of the present invention, and FIG. **2** is a view for illustrating an optical functional layer included in the laminate illustrated in FIG. **1.** For ease of viewing in the drawings, hatching for the optical functional layer is omitted in FIG. **1** and FIG. **2.**

A laminate **100** includes an optical functional layer **10** and a low-refractive index layer **20**. The optical functional layer **10** includes a first main surface **10a** and a second main surface **10b** facing each other. The first main surface **10a** is formed into a convex surface, and the second main surface **10b** is formed into a flat surface. The optical functional layer **10** is, for example, a lenticular lens having a configuration in which a plurality of protrusions (e.g., cylindrical lenses) **11** each linearly extending on a base **12** are arranged in parallel. The protrusions **11** are arranged in an **X** direction (left-right direction) of FIG. **1** with a ridge direction thereof being a **Y** direction of FIG. **1.** The low-refractive index layer **20** is formed on the first main surface (convex surface) **10a** side of the optical functional layer **10**.

A height $H_1$ of each of the protrusions **11** of the optical functional layer **10** may be set to any appropriate value. The height $H_1$ of each of the protrusions **11** is, for example, from 10 nm to 100 $\mu$m, preferably from 1 $\mu$m to 50 $\mu$m, more preferably from 5 $\mu$m to 30 $\mu$m, still more preferably from 10 $\mu$m to 20 $\mu$m. The term "height of each of the protrusions" as used herein means the height from the bottom surface of the convex shape to the highest portion (e.g., an apex **t**) thereof.

A pitch **P** of the protrusions **11** of the optical functional layer **10** may be set to any appropriate value. The pitch **P** of the protrusions **11** is, for example, from 1 $\mu$m to 1,000 $\mu$m, preferably from 5 $\mu$m to 500 $\mu$m, more preferably from 10 $\mu$m to 250 $\mu$m, still more preferably from 40 $\mu$m to 120 $\mu$m. The term "pitch of the protrusions" as used herein means the distance between the centers of adjacent protrusions in plan view. In the illustrated example, the pitch **P** of the protrusions is the distance between the highest portions (e.g., apexes **t**) of the adjacent protrusions **11**. In one embodiment, the pitch **P** of the protrusions **11** substantially corresponds to a width **D** of each of the protrusions **11**.

A height $H_2$ of the base **12** of the optical functional layer **10** may be set to any appropriate value. The height $H_2$ of the base **12** is, for example, from 15 $\mu$m to 360 $\mu$m, preferably from 30 $\mu$m to 180 $\mu$m, more preferably from 60 $\mu$m to 120

μm.

The low-refractive index layer **20** is in direct contact with the first main surface **10a** of the optical functional layer **10.** The low-refractive index layer **20** may be formed on the first main surface **10a** via, for example, an adhesion layer (not shown). In contrast, adverse effects caused by the refractive index of the adhesion layer can be avoided by, for example, directly forming the low-refractive index layer **20** on the first main surface **10a.** The direct formation of the low-refractive index layer **20** on the optical functional layer **10** may be achieved by, for example, applying or printing a material for forming a low-refractive index layer. When the low-refractive index layer **20** is directly formed on the first main surface **10a** of the optical functional layer **10,** the adhesive strength (e.g., 180° peel adhesive strength) of the low-refractive index layer **20** with respect to the optical functional layer **10** is preferably 1 N/25 mm or more, more preferably 3 N/25 mm or more, still more preferably 5 N/25 mm or more. An upper surface **20a** of the low-refractive index layer **20** may have an uneven shape following the unevenness of the convex surface **10a** of the optical functional layer **10,** or may be a flat surface unlike the illustrated example.

In the laminate **100,** voids **13** are formed between the optical functional layer **10** and the low-refractive index layer **20.** An upper end portion **11a** of each of the protrusions **11** of the optical functional layer **10** is covered with the low-refractive index layer **20,** and each of the voids **13** is formed so as to be surrounded by the protrusions **11** of the optical functional layer **10** and the low-refractive index layer **20.** When the low-refractive index layer **20** is formed on the convex surface **10a** side of the optical functional layer **10** to form the voids **13** as described above, the function of the optical functional layer **10** can be maintained. For example, when the optical functional layer **10** is a lenticular lens, the condensing area when parallel light is allowed to enter the optical functional layer **10** can be reduced. In addition, when the low-refractive index layer **20** is formed on the convex surface **10a** side of the optical functional layer **10,** a protective structure for the optical functional layer **10** can be formed, and for example, mechanical strength can be ensured.

The ratio of a height $H_3$ of each of the voids **13** to the height $H_1$ of each of the protrusions **11** ($H_3/H_1 \times 100$, hereinafter referred to as "void ratio") is, for example, more than 0%, preferably 10% or more, more preferably 30% or more, still more preferably 40% or more, particularly preferably 50% or more. With such void ratio, the function of the optical functional layer **10** can be satisfactorily maintained. Meanwhile, the void ratio is, for example, less than 100%, preferably 90% or less, more preferably 80% or less, still more preferably 70% or less, particularly preferably 60% or less. With such void ratio, the optical functional layer **10** can be satisfactorily protected, and for example, excellent mechanical strength can be obtained.

The laminate **100** may include a first pressure-sensitive adhesive layer **31** formed on the first main surface **10a** side of the optical functional layer **10.** In the illustrated example, the first pressure-sensitive adhesive layer **31** is directly formed on the low-refractive index layer **20.** Through the formation of the low-refractive index layer **20,** a protective structure formed of the first pressure-sensitive adhesive layer **31** can be formed while a decrease in function of the optical functional layer **10** by the first pressure-sensitive adhesive layer **31** is suppressed, and for example, mechanical strength can be ensured. The laminate **100** may include a second pressure-sensitive adhesive layer formed on the second main surface **10b** side of the optical functional layer **10,** though the second pressure-sensitive adhesive layer is not shown. In practical use, a release liner (not shown) is preferably temporarily attached to the surface of the pressure-sensitive adhesive layer until the laminate is used. When the release liner is temporarily attached, the pressure-sensitive adhesive layer is protected, and formation of a roll of the laminate is enabled.

The optical functional layer typically has a function of changing a direction of light. A laminate including such optical functional layer can achieve the following effects in accordance with the kind of the optical functional layer. For example, various products are subjected to surface decoration, and hence design properties thereof can be improved. Specifically, (1) a color of a display image can be changed in accordance with a viewing angle, and/or (2) a different image can be displayed in accordance with the viewing angle. Accordingly, the laminate according to the embodiment of the present invention may also be referred to as "decorative film," "optical laminate," or the like. In the example illustrated in FIG. **1,** a decorative portion **40** is formed on the second main surface **10b** side of the optical functional layer **10,** and for example, a pattern corresponding to the size of each of the protrusions (e.g., cylindrical lenses) **11** is drawn on the decorative portion **40.**

As the optical functional layer, in addition to the lenticular lens, any appropriate film having an uneven shape on the surface may be adopted. Typical examples of the optical functional layer **10** include a reflection-type hologram film, a microlens array film, and a prism film. The uneven shape of the optical functional layer may be appropriately designed in accordance with purposes. For example, any appropriate uneven shape capable of exhibiting a function, such as light diffusion, light scattering, light reflection, or light diffraction, may be adopted as an uneven shape of the reflection-type hologram film. Typical examples thereof include a Fourier transformation structure, a light diffraction pattern, and a moth-eye structure in addition to the lenticular lens as in the illustrated example. In addition, an uneven shape capable of exhibiting specific brightness but without a light diffraction function, such as a hairline pattern, a mat pattern, a parallel-line pattern, or an interference pattern, may be adopted. The sizes, such as the height of each of the protrusions and the pitch of the protrusions, may be appropriately set in accordance with the uneven shape.

The refractive index of the low-refractive index layer **20** is typically 1.30 or less, and the lower limit thereof is more than 1.00. The refractive index of the low-refractive index layer **20** is preferably from 1.15 to 1.30, more preferably from 1.17 to 1.28, still more preferably from 1.18 to 1.26, particularly preferably from 1.19 to 1.24. With such refractive index, a decrease in function of the optical functional layer by formation of a layer on the first main surface (convex surface) side of the optical functional layer can be significantly satisfactorily suppressed. Unless otherwise stated, the refractive index refers to a refractive index measured at a wavelength of 550 nm. The refractive index is, for example, a value measured by a method described in Example to be described later.

The total light transmittance of the low-refractive index layer **20** is preferably from 85% to 99%, more preferably from 87% to 98%, still more preferably from 89% to 97%. When such low-refractive index layer is formed on the first main surface (convex surface) side of the optical functional layer, for example, the laminate as a whole can achieve excellent transparency. As a result, for example, when the laminate is applied to various products, visibility of a product structure, an image or the like on a side opposite to a viewer side of the optical functional layer can be ensured. The total light transmittance may be measured with, for example, a haze meter to be described later.

The haze of the low-refractive index layer **20** is preferably less than 5%, more preferably less than 3%. Meanwhile, the haze is, for example, 0.1% or more, and may be 0.2% or more. When such low-refractive index layer is formed on the first main surface (convex surface) side of the optical functional layer, for example, the laminate as a whole can achieve excellent transparency. As a result, for example, when the laminate is applied to various products, visibility of a product structure, an image or the like on a side opposite to a viewer side of the optical functional layer can be ensured. For example, the haze may be calculated by the following equation through use of a value measured with a haze meter (e.g., "HM-150" manufactured by Murakami Color Research Laboratory Co., Ltd.).

Haze (%)=[diffuse transmittance (%)/total light transmittance (%)]$\times$100 (%)

The thickness of the low-refractive index layer **20** is preferably 20 $\mu$m or less, more preferably 10 $\mu$m or less, still more preferably 8 $\mu$m or less, and may be 5 $\mu$m or less. With such thickness, the function of the optical functional layer **10** can be satisfactorily maintained. Meanwhile, the thickness of the low-refractive index layer **20** is preferably 0.5 $\mu$m or more, more preferably 1 $\mu$m or more, still more preferably 1.5 $\mu$m or more, particularly preferably 2 $\mu$m or more, most preferably 3 $\mu$m or more. With such thickness, the optical functional layer **10** can be satisfactorily protected, and for example, excellent mechanical strength can be obtained.

Any appropriate configuration may be adopted for the low-refractive index layer as long as the layer can achieve the above-mentioned desired characteristics. Materials described in, for example, WO 2004/113966 A1, JP 2013-254183 A, and JP 2012-189802 A may each be adopted as a material for forming the low-refractive index layer. A typical example of the material for forming the low-refractive index layer is a silicon compound. Examples of the silicon compound include: silica-based compounds; hydrolyzable silanes, and partial hydrolysates and dehydration condensates thereof; silanol group-containing silicon compounds; and active silica obtained by bringing a silicate into contact with an acid or an ion-exchange resin. The examples of the material for forming the low-refractive index layer also include: organic polymers; polymerizable monomers (e.g., a (meth)acrylic monomer and a styrene-based monomer); and curable resins (e.g., a (meth)acrylic resin, a fluorine-containing resin, and a urethane resin). Those materials may be used alone or in combination thereof.

In one embodiment, the low-refractive index layer may contain spaces, such as pores and gaps, therein. In this case, the porosity of the low-refractive index layer is preferably from 20 vol% to 60 vol%, more preferably from 25 vol% to 55 vol%, still more preferably from 30 vol% to 50 vol%, particularly preferably from 35 vol% to 45 vol%. With such porosity, the refractive index of the low-refractive index layer can be set to an appropriate range, and strength can be ensured. Here, the porosity is a value calculated from the value of the refractive index measured with an ellipsometer by using Lorentz-Lorenz's formula.

The sizes of the pores that may be contained in the low-refractive index layer may be adjusted to desired sizes in accordance with purposes, applications, and the like. The sizes of the pores that may be contained in the low-refractive index layer are, for example, 2 nm or more, preferably 5 nm or more, more preferably 10 nm or more, still more preferably 20 nm or more. Meanwhile, the sizes of the pores that may be contained in the low-refractive index layer are, for example, 500 nm or less, preferably 200 nm or less, more preferably 100 nm or less. The size of each of the pores refers to a major axis diameter out of the major axis diameter and minor axis diameter of the pore.

The sizes of the above-mentioned pores may be quantified by a BET test method. In one embodiment, 0.1 g of a measurement sample (e.g., a formed low-refractive index layer) is loaded into the capillary of a specific surface area-measuring apparatus (e.g., "ASAP 2020" manufactured by Micromeritics Instrument Corporation), and is then dried under reduced pressure at room temperature for 24 hours so that a gas contained in the measurement sample may be removed. Then, an adsorption isotherm is drawn by causing the measurement sample to adsorb a nitrogen gas, and its pore size distribution is determined. Thus, the sizes of the pores may be evaluated.

The low-refractive index layer containing the spaces therein is, for example, a porous layer formed of a porous body and/or a layer including an air layer in at least part thereof. The low-refractive index layer typically contains aerogel and/or particles (which may be, for example, hollow fine particles and/or porous particles). The low-refractive index layer may be preferably a nanoporous layer (specifically a porous layer in which the diameters of 90% or more of pores fall within the range of from $10^{-1}$ nm to $10^3$ nm).

Any appropriate particles may be adopted as the particles. The particles are each typically formed of a silica-based compound. Examples of the shapes of the particles include a spherical shape, a plate shape, a needle shape, a string shape, and a botryoidal shape. String-shaped particles are, for example, particles in which a plurality of particles each having a spherical shape, a plate shape, or a needle shape are strung together like beads, short fiber-shaped particles (e.g., short fiber-shaped particles described in JP 2001-188104 A), and a combination thereof. The string-shaped particles may be linear or branched. Botryoidal-shaped particles are, for example, particles in which a plurality of spherical, plate-shaped, and needle-shaped particles aggregate to form a botryoidal shape. The shapes of the particles may be identified through, for example, observation with a transmission electron microscope.

An example of the low-refractive index layer is a structural body, which is formed of one or a plurality of kinds of constituent units each forming a fine void structure, and in which the constituent units are bonded to each other (e.g., chemically bonded to each other through a catalytic action). Examples of the shape of each of the constituent units include a particle shape, a fiber shape, a rod shape, and a flat plate shape. The constituent units may have only one shape, or may have two or more shapes in combination.

A specific example of the low-refractive index layer is a porous layer formed of a porous body in which particles having micropores (hereinafter referred to as "microporous particles") are chemically bonded to each other. Such porous layer may be obtained by, for example, chemically bonding microporous particles to each other. The shape of each of the microporous particles is not particularly limited, and may be, for example, a spherical shape or other shapes. In addition, the microporous particles may be, for example, sol-gel beaded particles, nanoparticles (e.g., hollow nanosilica nanoballoon particles), or nanofibers. The microporous particles each typically contain an inorganic substance. Specific examples of the inorganic substance include silicon (Si), magnesium (Mg), aluminum (Al), titanium (Ti), zinc (Zn), and zirconium (Zr). Those inorganic substances may be used alone or in combination thereof. In one embodiment, the microporous particles are, for example, microporous particles of a silicon compound, and the porous body is, for example, a silicone porous body. The microporous particles of the silicon compound each contain, for example, a pulverized product of a gel-like silica compound.

Another example of the low-refractive index layer is a layer, which contains fibrous substances such as nanofibers, and in which spaces are formed by the entanglement of the fibrous substances. Still another example of the low-refractive index layer is a layer formed by using hollow nanoparticles or nanoclay, or a layer formed by using hollow nanoballoons or magnesium fluoride. The low-refractive index layer may be formed of a single constituent substance, or may be formed of a plurality of constituent substances. The low-refractive index layer may be formed in a single form of the above-mentioned examples, or may be formed in a plurality of forms of the above-mentioned examples.

The above-mentioned porous layer may be, for example, an open-cell structural body in which hole structures are continuous with each other. The open-cell structure means that the hole structures are three-dimensionally continuous with each other in the porous body (e.g., silicone porous body), and can be said to be a state in which the spaces of the hole structures are continuous with each other. When the porous layer has an open-cell structure, its porosity can be increased. It is difficult to form an open-cell structure through use of closed-cell particles each individually having a hole structure, such as hollow particles (e.g., hollow silica). In contrast, for example, when silica sol particles (pulverized products of a gel-like silicon compound that forms sol) are used, the silica sol particles each may have a three-dimensional dendritic structure, and hence the dendritic particles are sedimented and deposited in a coating film (coating film of the sol containing the pulverized products of the gel-like silicon compound). Accordingly, an open-cell structure can be easily formed. The porous layer preferably has a monolith structure in which an open-cell structure includes a plurality of pore size distributions. The monolith structure means, for example, a hierarchical structure including a structure in which nanosized fine pores are present and an open-cell structure in which the nanosized fine pores assemble. With the monolith structure, both of film strength and a high porosity can be achieved by, for example, imparting the high porosity to the layer through use of a coarse open-cell structure while imparting the film strength thereto through use of a fine pore.

For example, the monolith structure may be formed by controlling the pore size distribution of a void structure to be produced in the gel (gel-like silicon compound) at a stage before its pulverization into the silica sol particles. In addition, the monolith structure may be formed by, for example, controlling the particle size distribution of the silica sol particles after the pulverization to a predetermined size at the time of the pulverization of the gel-like silicon compound. The particle size distribution of the pulverized products may be measured with, for example, a particle size distribution-evaluating apparatus based on a dynamic light scattering method, a laser diffraction method, or the like, and an electron microscope, such as a scanning electron microscope (SEM) or a transmission electron microscope (TEM).

As described above, the porous layer may contain pulverized products of a gel-like compound such as a gel-like silicon compound, and the pulverized products are, for example, chemically bonded to each other (chemical bonding). There is no particular limitation on the chemical bonding, and examples thereof include cross-linking bonding, covalent bonding, and hydrogen bonding. The volume-average particle diameter of the pulverized products in the porous layer is, for example, 0.10 μm or more, preferably 0.20 μm or more, more preferably 0.40 μm or more. Meanwhile, the volume-average particle diameter of the pulverized products in the porous layer is, for example, 2.00 μm or less, preferably 1.50 μm or less, more preferably 1.00 μm or less. The volume-average particle diameter is an indicator of the variation in particle size of the pulverized products, and is determined by particle size distribution measurement.

The low-refractive index layer may contain silicon atoms. For example, the silicon atoms contained in the low-refractive index layer preferably form a siloxane bond. The ratio of unbonded silicon atoms (specifically, residual silanol groups) out of all the silicon atoms contained in the low-refractive index layer is, for example, less than 50%, preferably 30% or less, more preferably 15% or less.

A laminate according to an embodiment of the present invention may be produced by, for example, preparing an optical functional layer including a first main surface and a second main surface facing each other, the first main surface having protrusions formed thereon, forming a coating film of a material for forming a low-refractive index layer on the first main surface (convex surface) of the optical functional layer, and heating the resultant coating film to form a low-refractive index layer. The coating film can be unevenly distributed on an upper end side of the convex surface of the optical functional layer by the heating, and voids can be formed between the resultant low-refractive index layer and the optical functional layer, as illustrated in FIG. **1**.

In one embodiment, the above-mentioned coating film may be formed through use of a coating liquid containing microporous particles, and the microporous particles may be chemically bonded to each other by heating (including drying) this coating liquid. The coating liquid containing microporous particles is, for example, a suspension. For example, a catalyst (cross-linking reaction accelerator) that accelerates the cross-linking bonding between the microporous particles (e.g., a dehydration condensation reaction of residual silanol groups that may be contained in the microporous particles) and/or a substance (catalyst generator) that generates a catalyst (cross-linking reaction accelerator) may be added to the coating liquid. Examples of the catalyst include a photoactive catalyst and a thermally active catalyst. Examples of the substance that generates a catalyst (catalyst generator) include a photocatalyst generator and a thermal catalyst generator. Examples of the photocatalyst generator include a photobase generator (substance that generates a basic catalyst by irradiation with light) and a photoacid generator (substance that generates an acidic catalyst by irradiation with light). For example, the microporous particles are pulverized products of a gel-like compound (preferably, a gel-like silicon compound), and the low-refractive index layer is a porous layer formed of a porous body (preferably, a silicone porous body) containing the pulverized products of a gel-like compound. Such microporous particles may have a state in which three-dimensional structures of the gel-like compound before pulverization are dispersed in a three-dimensional basic structure, and a structure based on the three-dimensional basic structure may be formed through use of such microporous particles. Specifically, a new structure different from the three-dimensional structure of the gel-like compound may be formed. Thus, the finally obtained low-refractive index layer (porous layer) may have a low refractive index equivalent to, for example, that of an air layer. In addition, when the microporous particles are chemically bonded to each other, the above-mentioned three-dimensional basic structure can be fixed, and sufficient strength can be ensured in the finally obtained low-refractive index layer (porous layer). Details about specific configurations of the low-refractive index layer (porous layer) and the method of forming the low-refractive index layer (porous layer) are described in, for example, WO 2019/151073 A1, the description of which is incorporated herein by reference.

The coating thickness of the above-mentioned coating liquid may be set to, for example, the thickness that allows voids to be formed between the resultant low-refractive index layer and the optical functional layer, and may be appropriately set, for example, in accordance with the size of each of the protrusions of the optical functional layer. For example, the coating thickness may be 2 times or more, 2.5 times or more, or 3 times or more the height of each of the protrusions. Meanwhile, the coating thickness may be 10 times or less the height of each of the protrusions. For example, the coating thickness may be 30 μm or more, or 40 μm or more. Meanwhile, the coating thickness may be 200 μm or less. The heating temperature of the coating film (coating liquid) is, for example, 20°C or more, preferably 50°C or more. Meanwhile, the heating temperature of the coating film (coating liquid) is, for example, 200°C or less, preferably 150°C or less. The heating time of the coating film (coating liquid) is, for example, 10 seconds or more. Meanwhile, the heating time of the coating film (coating liquid) is, for example, 24 hours or less, preferably 1 hour or less, more preferably 30 minutes or less, still more preferably 10 minutes or less.

The above-mentioned pressure-sensitive adhesive layer is formed of any appropriate pressure-sensitive adhesive. In one embodiment, the first pressure-sensitive adhesive layer **31** is formed of a pressure-sensitive adhesive having such hardness that the pressure-sensitive adhesive does not permeate spaces, such as pores and gaps, which may be contained in the low-refractive index layer **20**. The storage modulus of elasticity of the first pressure-sensitive adhesive layer **31** at 23°C is typically from $1.0 \times 10^5$ (Pa) to $1.0 \times 10^7$ (Pa). The storage modulus of elasticity of the first pressure-sensitive adhesive layer **31** at 23°C is, for example, $1.1 \times 10^5$ (Pa) or more, $1.2 \times 10^5$ (Pa) or more, $1.3 \times 10^5$ (Pa) or more, $1.4 \times 10^5$ (Pa) or more, $1.5 \times 10^5$ (Pa) or more, $1.6 \times 10^5$ (Pa) or more, $1.7 \times 10^5$ (Pa) or more, $1.8 \times 10^5$ (Pa) or more, $1.9 \times 10^5$ (Pa) or more, or $2.0 \times 10^5$ (Pa) or more, and $1.0 \times 10^7$ (Pa) or less, $5.0 \times 10^6$ (Pa) or less, $1.0 \times 10^6$ (Pa) or less, or $5.0 \times 10^5$ (Pa) or less. The storage modulus of elasticity of the first pressure-sensitive adhesive layer **31** at 23°C is preferably from $1.3 \times 10^5$ (Pa) to $1.0 \times 10^6$ (Pa), more preferably from $1.5 \times 10^5$ (Pa) to $5.0 \times 10^5$ (Pa). The storage modulus of elasticity is determined by reading a value at 23°C at the time of measurement in conformity with a method described in JIS K 7244-1 "Plastics-Determination of dynamic mechanical properties" under the condition of a frequency of 1 Hz in the range of from -50°C to 150°C at a rate of temperature increase of 5°C/min.

A typical example of the pressure-sensitive adhesive for forming the first pressure-sensitive adhesive layer **31** is an acrylic pressure-sensitive adhesive (acrylic pressure-sensitive adhesive composition). The acrylic pressure-sensitive adhesive composition typically contains a (meth)acrylic polymer as a main component (base polymer). The (meth)acrylic polymer may be incorporated into the pressure-sensitive adhesive composition at a ratio of, for example, 50 wt% or more, preferably 70 wt% or more, more preferably 90 wt% or more in the solid content of the pressure-sensitive adhesive composition. The (meth)acrylic polymer contains, as a main component, an alkyl (meth)acrylate serving as a monomer unit. The term "(meth)acrylate" refers to an acrylate and/or a methacrylate. The alkyl group of the alkyl (meth)acrylate is, for example, a chain (e.g., linear or branched) or cyclic alkyl group having 1 to 20 carbon atoms. As a monomer for forming the (meth)acrylic polymer, in addition to the alkyl (meth)acrylate, there are given comonomers, such as a carboxyl group-containing monomer, a hydroxyl group-containing monomer, an amide group-containing monomer, an aromatic ring-containing (meth)acrylate, and a heterocycle-containing (meth)acrylate.

The acrylic pressure-sensitive adhesive composition may contain an acrylic oligomer in addition to the above-mentioned base polymer (or a prepolymer that is a partially polymerized product thereof). The acrylic oligomer may typically have a weight-average molecular weight of from about 1,000 to about 30,000. The acrylic oligomer contains, as a main component, an alkyl (meth)acrylate serving as a monomer unit. For example, the acrylic pressure-sensitive adhesive composition is prepared by mixing an acrylic oligomer, a silane coupling agent and/or a cross-linking agent, other additives, and the like, as required, into the base polymer (prepolymer). The remaining part of the monomers that may form the base polymer may be added to the acrylic pressure-sensitive adhesive composition as required. The silane coupling agent is, for example, an epoxy group-containing silane coupling agent. The cross-linking agent is, for example, an isocyanate-based cross-linking agent or a peroxide-based cross-linking agent.

The thickness of the first pressure-sensitive adhesive layer **31** is, for example, from 3 $\mu$m to 60 $\mu$m, preferably from 3 $\mu$m to 30 $\mu$m, more preferably from 5 $\mu$m to 10 $\mu$m. When the thickness of the first pressure-sensitive adhesive layer **31** falls within such ranges, the following advantage is obtained: an influence on the optical functional layer is small while the layer has sufficient adhesive strength.

Examples

The present invention is specifically described below by way of Examples. However, the present invention is not limited to these Examples. Measurement methods for a refractive index and a storage modulus of elasticity are as described below. In addition, "%" and "part(s)" in Examples are by weight unless otherwise specified.

<Refractive Index>

A laminated film having an object to be measured (e.g., a porous layer) formed on an acrylic film was cut into a sample piece having a size of 25 mm by 50 mm, and the resultant sample piece was bonded to the surface of a glass plate (thickness: 3 mm) via a pressure-sensitive adhesive.
A central portion (diameter: about 20 mm) of a back surface of the above-mentioned glass plate was completely colored with a black marker pen. Thus, a sample by which light was not reflected on the back surface of the glass plate was produced.
The resultant sample was set in an ellipsometer (manufactured by J.A. Woollam Japan: VASE), and a refractive index was measured by causing light having a wavelength of 550 nm to enter the sample under the condition of an incident angle of from 50° to 80°.

<Storage Modulus of Elasticity>

An object to be measured (e.g., a pressure-sensitive adhesive layer) was formed to a thickness of about 1.5 mm by lamination or the like. This formed product was punched into a disc shape having a diameter of 7.9 mm to produce a test piece. This test piece was sandwiched between parallel plates, and viscoelasticity was measured under the following conditions with a dynamic viscoelasticity-measuring apparatus ("Advanced Rheometric Expansion System (ARES)" manufactured by Rheometric Scientific Co., Ltd.) to determine a storage modulus of elasticity at 23°C.

(Measurement Conditions)

·Deformation mode: Torsion
·Measurement frequency: 1 Hz
·Measurement temperature: from -50°C to +150°C
·Rate of temperature increase: 5°C/min

[Production Example 1] Preparation of Coating Liquid for forming Porous Layer

(1) Gelation of Silicon Compound

0.95 g of methyltrimethoxysilane (MTMS) that was a precursor of a silicon compound was dissolved in 2.2 g of dimethyl sulfoxide (DMSO). Thus, a mixed liquid A was prepared. 0.5 g of a 0.01 mol/L aqueous solution of oxalic acid was added to the mixed liquid A, and the mixture was stirred at room temperature for 30 minutes so that MTMS was hydrolyzed. Thus, a mixed liquid B containing tris(hydroxy)methylsilane was produced.
0.38 g of 28 wt% ammonia water and 0.2 g of pure water were added to 5.5 g of DMSO, and then the mixed liquid B was further added to the mixture, followed by stirring at room temperature for 15 minutes to perform the gelation of tris(hydroxy)methylsilane. Thus, a mixed liquid C containing a gel-like silicon compound was obtained.

(2) Aging Treatment

Aging treatment was performed by incubating the mixed liquid C containing the gel-like silicon compound, which had been prepared as described above, as it was at 40°C for 20 hours.

(3) Pulverization Treatment

Next, the gel-like silicon compound subjected to the aging treatment as described above was crushed into granular shapes each having a size of from several millimeters to several centimeters with a spatula. Next, 40 g of isopropyl alcohol (IPA) was added to the mixed liquid C, and the mixture was lightly stirred. After that, the mixture was left at rest at room temperature for 6 hours so that the solvent and the catalyst in the gel were decanted. The same decantation treatment was performed three times to replace the solvent with IPA. Thus, a mixed liquid D was obtained. Next, the gel-like silicon compound in the mixed liquid D was subjected to pulverization treatment (high-pressure media-less pulverization). The pulverization treatment (high-pressure media-less pulverization) was performed as follows: a homogenizer (manufactured by SMT Co., Ltd., product name: "UH-50") was used, and 1.85 g of the gel-like silicon compound in the mixed liquid D and 1.15 g of IPA were weighed in a 5-cubic centimeter screw bottle, followed by the performance of the pulverization of the mixture under the conditions of 50 W and 20 kHz for 2 minutes.
The gel-like silicon compound in the mixed liquid D was pulverized by the pulverization treatment, and hence the mixed liquid D was turned into a sol liquid E of the pulverized products. A volume-average particle diameter representing a variation in particle size of the pulverized products in the sol liquid E was determined to be from 0.50 $\mu$m to 0.70 $\mu$m with a dynamic light scattering-type nanotrack particle size analyzer (manufactured by Nikkiso Co., Ltd., UPA-EX150). Further, a methyl ethyl ketone (MEK) solution of a photobase generator (Wako Pure Chemical Industries, Ltd.: product name: WPBG-266) having a concentration of 1.5 wt% and a MEK solution of bis (trimethoxysilyl) ethane having a concentration of 5% were added at ratios of 0.062 g and 0.036 g, respectively to 0.75 g of the sol liquid E. Thus, a coating liquid for forming a porous layer was obtained.

[Production Example 2-1] Preparation 1 of Pressure-sensitive Adhesive

(Preparation of Acrylic Oligomer)

60 Parts by weight of dicyclopentanyl methacrylate (DCPMA) and 40 parts by weight of methyl methacrylate (MMA) serving as monomer components, 3.5 parts by weight of $\alpha$-thioglycerol serving as a chain transfer agent, and 100 parts by weight of toluene serving as a polymerization solvent were mixed and stirred at 70°C for 1 hour under a nitrogen atmosphere. Next, 0.2 part by weight of 2,2'-azobisisobutyronitrile (AIBN) serving as a thermal polymerization initiator was loaded into the mixture, and the resultant mixture was subjected to a reaction at 70°C for 2 hours. Then, the resultant was increased in temperature to 80°C and subjected to a reaction for 2 hours. After that, the reaction liquid was heated to 130°C so that the toluene, the chain transfer agent, and unreacted monomers were dried and removed. Thus, an acrylic oligomer in a solid form was obtained. The weight-average molecular weight of the resultant acrylic oligomer was 5,100, and the glass transition temperature thereof was 130°C.

(Preparation of Prepolymer)

43 Parts by weight of lauryl acrylate (LA), 44 parts by weight of 2-ethylhexyl acrylate (2EHA), 6 parts by weight of 4-hydroxybutyl acrylate (4HBA), and 7 parts by weight of N-vinyl-2-pyrrolidone (NVP) serving as monomer components for forming a prepolymer, and 0.015 part by weight of "Omnirad 184" manufactured by IGM Resins B.V. serving as a photopolymerization initiator were blended. The resultant mixture was polymerized by irradiation with ultraviolet light to provide a prepolymer (polymerization rate: about 10%).

(Preparation of Pressure-sensitive Adhesive Composition)

0.07 Part by weight of 1,6-hexanediol diacrylate (HDDA), 3 parts by weight of the above-mentioned acrylic oligomer, and 0.3 part by weight of a silane coupling agent ("KBM403" manufactured by Shin-Etsu Chemical Co., Ltd.) were added, as post-addition components, to 100 parts by weight of the above-mentioned prepolymer. After that, those components were uniformly mixed to prepare a pressure-sensitive adhesive composition.

(Formation of Pressure-sensitive Adhesive Layer)

A polyethylene terephthalate (PET) film having a thickness of 75 $\mu$m ("Diafoil MRF75" manufactured by Mitsubishi Chemical Corporation) having a silicone-based release layer formed on a surface was used as a substrate (also serving as a heavy release film), and the above-mentioned photocurable pressure-sensitive adhesive composition was applied to a thickness of 50 $\mu$m to the substrate to form a coating layer. A PET film having a thickness of 75 $\mu$m ("Diafoil MRE75" manufactured by Mitsubishi Chemical Corporation) having one surface subjected to silicone release treatment was bonded, as a cover sheet (also serving as a light release film), to the coating layer. This laminate was photocured by irradiation with ultraviolet light from the cover sheet side through use of a black light adjusted for position so that the irradiation intensity on the irradiation surface directly under the lamp was 5 mW/cm$^2$ to form a pressure-sensitive adhesive layer having a thickness of 50 $\mu$m.

[Production Example 2-2] Preparation 2 of Pressure-sensitive Adhesive

(Preparation of Acrylic Pressure-sensitive Adhesive Solution)

90.7 Parts of butyl acrylate, 6 parts of N-acryloylmorpholine, 3 parts of acrylic acid, 0.3 part of 2-hydroxybutyl acrylate, and 0.1 part by weight of 2,2'-azobisisobutyronitrile serving as a polymerization initiator were loaded into a four-necked flask including a stirring blade, a temperature gauge, a nitrogen gas-introducing tube, and a condenser together with 100 g of ethyl acetate, and a nitrogen gas was introduced to purge the flask with nitrogen while the mixture was gently stirred. After that, a liquid temperature in the flask was kept at around 55°C, and a polymerization reaction was performed for 8 hours to prepare an acrylic polymer solution. 0.2 Part of an isocyanate cross-linking agent (CORONATE L manufactured by Nippon Polyurethane Industry Co., Ltd., tolylene diisocyanate adduct of trimethylolpropane), 0.3 part of benzoyl peroxide (NYPER BMT manufactured by Nippon Oil & Fats Co., Ltd.), and 0.2 part of $\gamma$-glycidoxypropylmethoxysilane (manufactured by Shin-Etsu Chemical Co., Ltd.: KBM-403) were blended into 100 parts of the solid content of the resultant acrylic polymer solution to prepare an acrylic pressure-sensitive adhesive solution.

(Formation of Pressure-sensitive Adhesive Layer)

Next, the acrylic pressure-sensitive adhesive solution was applied to one surface of a silicone-treated polyethylene terephthalate (PET) film (manufactured by Mitsubishi Chemical Polyester Film Co., Ltd., thickness: 38 $\mu$m) so that the thickness after drying (the thickness of a pressure-sensitive adhesive layer to be formed) became 10 $\mu$m, followed by drying at 150°C for 3 minutes. Thus, the pressure-sensitive adhesive layer was formed. The resultant pressure-sensitive adhesive layer had a storage modulus of elasticity of $1.3\times10^5$ (Pa).

[Example 1]

A lenticular film having such a shape as illustrated in FIG. **2** ("Lenticular Lens", manufactured by Nihon Tokushu Kogaku Jushi Co., Ltd.) was used as an optical functional layer. The height **H$_1$** of each of protrusions of the lenticular film was 17 $\mu$m, the width **D** of each of the protrusions (pitch **P** of the protrusions) was 80 $\mu$m, and the height **H$_2$** of a base was 95 $\mu$m. The coating liquid for forming a porous layer prepared in Production Example 1 was applied to the convex surface of the lenticular film so that the coating thickness was from 50 $\mu$m to 60 $\mu$m to provide a coating film. After that, the coating film was dried by heating at 100°C for 1 minute to provide a porous body. The porous body after the drying was irradiated with ultraviolet light. Specifically, the porous body after the drying was irradiated with light having a wavelength of 360 nm under the condition of a light irradiation amount (energy) of 500 mJ. After that, a pressure-sensitive adhesive layer (thickness: 50 $\mu$m) formed of the pressure-sensitive adhesive prepared in Production Example 2-1 was bonded to the surface of the porous body, and heating aging was performed under the conditions of 60°C and 22 hours to form a porous layer on the lenticular film. Thus, a laminate having the configuration "lenticular film/porous layer/first pressure-sensitive adhesive layer" was produced.

The refractive index of the resultant porous layer was 1.15, and the porosity thereof was 60%. The coating film was unevenly distributed on the upper end side of each of the protrusions of the lenticular film by heating (drying), and voids were formed between the convex surface of the lenticular film and the porous body as illustrated in FIG. **1.** The maximum thickness of the resultant porous layer was 6 $\mu$m, the height $H_3$ of each of the voids was 10 $\mu$m, and the void ratio thereof was 59%.

[Comparative Example 1]

A laminate was produced in the same manner as in Example 1 except that the coating thickness was changed to less than 30 $\mu$m in the application of the coating liquid for forming a porous layer. Such voids as illustrated in FIG. **1** were not formed between the convex surface of the lenticular film and the porous body (the finally obtained porous layer was formed so as to fill the spaces between the protrusions of the lenticular film) by heating (drying) the coating film, and the maximum thickness of the resultant porous layer was 1.4 $\mu$m, and the void ratio thereof was 0%.

[Comparative Example 2]

A laminate was produced in the same manner as in Example 1 except that: the first pressure-sensitive adhesive layer was directly formed on the convex surface of the optical functional layer (the application of the coating liquid for forming a porous layer, followed by heating and irradiation with ultraviolet light, was not performed, and thus the porous layer was not formed); and the heating aging was not performed. In the resultant laminate, the first pressure-sensitive adhesive layer was embedded between the protrusions of the lenticular film, and no voids were formed between the convex surface of the lenticular film and the first pressure-sensitive adhesive layer.

[Comparative Example 3]

A laminate was produced in the same manner as in Example 1 except that: the first pressure-sensitive adhesive layer was directly formed on the convex surface of the optical functional layer (the application of the coating liquid for forming a porous layer, followed by heating and irradiation with ultraviolet light, was not performed, and thus the porous layer was not formed); and the pressure-sensitive adhesive prepared in Production Example 2-2 was used as a pressure-sensitive adhesive for forming the first pressure-sensitive adhesive layer, and the heating aging was not performed. In the resultant laminate, the first pressure-sensitive adhesive layer did not enter spaces between the protrusions of the lenticular film, and voids were formed between the convex surface of the lenticular film and the first pressure-sensitive adhesive layer.

[Evaluation]

The laminate obtained in each of Example and Comparative Examples was evaluated as described below. The evaluation results are summarized in Table 1.

(1) Optical Characteristics

The following pattern was prepared. In the pattern, design including thin lines each having a width of 40 $\mu$m indicated by different colors (two colors) alternately arranged without gaps was printed in accordance with the size of each of the protrusions of the lenticular film. The resultant laminate was placed on this pattern, and under this state, the pattern was observed from the surface of the laminate. Specifically, a change in design that was visually recognized when the viewing angle was changed with respect to the surface of the laminate was evaluated. The evaluation criteria are as described below.

(Evaluation Criteria)

o(Satisfactory): The design is changed when observed with angles changed, and the design can be observed from any angle.

× (Poor): The design is not changed even when observed with angles changed.

(2) Mechanical Strength

The mechanical strength was evaluated by a peel test.

For the peel test, in lamination of the pressure-sensitive adhesive layer in the production of the laminate of each of Example and Comparative Examples, a pressure-sensitive adhesive sheet in which a pressure-sensitive adhesive layer was laminated on a PET film having a width of 25 mm and a length of 300 mm was used to provide a test sample (laminate) having a size of a width of 25 mm and a length of 300 mm.

The resultant test sample was subjected to a 180° peel test in which the porous layer or the first pressure-sensitive adhesive layer was peeled in a lengthwise direction from the lenticular film (optical functional layer) of the laminate by using a tensile tester (product name: TCM-1kNB, manufactured by Minebea Co., Ltd.), and an interlayer adhesive strength (180° peel adhesive strength) (unit: N/25 mm) between the optical functional layer and the layer adjacent thereto was measured. The measurement was performed under the conditions of an atmosphere of 23°C and 50%RH, a peel angle of 180°, and a tensile rate of 300 mm/min. The evaluation criteria are as described below.

(Evaluation Criteria)

◎ (Significantly satisfactory): The adhesive strength was 5 N/25 mm or more.

∘ (Satisfactory): The adhesive strength was 1 N/25 mm or more and less than 5 N/25 mm.

× (Poor): The adhesive strength was less than 1 N/25 mm.

Table 1

|  | Optical characteristics | Mechanical strength |
| --- | --- | --- |
| Example 1 | ○ | ◎ |
| Comparative Example 1 | × | ◎ |
| Comparative Example 2 | × | ◎ |
| Comparative Example 3 | ○ | × |

As is apparent from Table 1, according to Example of the present invention, the mechanical strength can be ensured while the function of the optical functional layer is maintained.

Industrial Applicability

The laminate according to the embodiment of the present invention can be suitably used as a decorative film, for example.

Reference Signs List

10 optical functional layer

10a first main surface (convex surface)
10b second main surface
11 protrusion
12 base

**13** void
**20** low-refractive index layer
**31** first pressure-sensitive adhesive layer
**100** laminate

**Claims**

1. A laminate, comprising:

 an optical functional layer including a first main surface and a second main surface facing each other, the first main surface having protrusions formed thereon; and
 a low-refractive index layer formed on a first main surface side of the optical functional layer, the low-refractive index layer having a refractive index of 1.30 or less,
 wherein the laminate has voids formed between the optical functional layer and the low-refractive index layer.

2. The laminate according to claim 1, wherein the protrusions each have an apex.

3. The laminate according to claim 1, wherein a ratio of a height of each of the voids to a height of each of the protrusions is 10% or more.

4. The laminate according to claim 1, wherein the low-refractive index layer is directly in contact with the first main surface of the optical functional layer.

5. The laminate according to claim 1, wherein the protrusions each have a height of from 10 nm to 100 $\mu$m.

6. The laminate according to claim 1, wherein the protrusions have a pitch of from 1 $\mu$m to 1,000 $\mu$m.

7. The laminate according to claim 1, wherein the low-refractive index layer is a porous layer formed of a porous body.

8. The laminate according to claim 1, wherein the laminate comprises the optical functional layer, the low-refractive index layer, and a first pressure-sensitive adhesive layer in the stated order.

9. The laminate according to claim 1, wherein the laminate comprises a second pressure-sensitive adhesive layer, the optical functional layer, and the low-refractive index layer in the stated order.

10. A method of producing a laminate, comprising:

 preparing an optical functional layer including a first main surface and a second main surface facing each other, the first main surface having protrusions formed thereon;
 forming a coating film of a material for forming a low-refractive index layer on the first main surface of the optical functional layer; and
 heating the coating film to form a low-refractive index layer having a refractive index of 1.30 or less,
 wherein the heating forms voids between the optical functional layer and the low-refractive index layer.

FIG. 1

FIG. 2

## INTERNATIONAL SEARCH REPORT

| International application No. |
| --- |
| **PCT/JP2024/003806** |

| A. | CLASSIFICATION OF SUBJECT MATTER |
| --- | --- |

*G02B 5/00*(2006.01)i; *B32B 3/26*(2006.01)i; *B32B 3/30*(2006.01)i; *B32B 7/023*(2019.01)i; *F21V 5/00*(2018.01)i;
*F21V 5/04*(2006.01)i; *G02B 3/06*(2006.01)i; *G02B 5/02*(2006.01)i; *G02B 1/118*(2015.01)n; *G02B 3/00*(2006.01)n;
*G02B 5/04*(2006.01)n; *G02B 5/18*(2006.01)n; *G02B 5/32*(2006.01)n
FI: G02B5/00 Z; B32B7/023; G02B3/06; F21V5/04 350; F21V5/00 100; F21V5/00 610; F21V5/00 600; G02B5/02 C;
B32B3/30; B32B3/26 Z; G02B5/04 A; G02B5/18; G02B5/32; G02B1/118; G02B3/00 A

According to International Patent Classification (IPC) or to both national classification and IPC

| B. | FIELDS SEARCHED |
| --- | --- |

Minimum documentation searched (classification system followed by classification symbols)

G02B5/00; B32B3/26; B32B3/30; B32B7/023; F21V5/00; F21V5/04; G02B3/06; G02B5/02; G02B1/118; G02B3/00; G02B5/04; G02B5/18; G02B5/32

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | JP 2017-97334 A (NITTO DENKO CORPORATION) 01 June 2017 (2017-06-01) claims 1-6, paragraphs [0001], [0008]-[0079], fig. 1 | 1-9 |
| Y | claims 1-6, paragraphs [0001], [0008]-[0079], fig. 1 | 1-10 |
| X | JP 2013-517528 A (3M INNOVATIVE PROPERTIES COMPANY) 16 May 2013 (2013-05-16) claims 1-3, paragraphs [0002], [0025]-[0096], [0111]-[0114], fig. 1-8 | 1, 2, 4-10 |
| Y | claims 1-3, paragraphs [0002], [0025]-[0096], [0111]-[0114], fig. 1-8 | 1-10 |
| Y | JP 2023-505183 A (3M INNOVATIVE PROPERTIES COMPANY) 08 February 2023 (2023-02-08) paragraphs [0001], [0052]-[0059], [0064], fig. 1-13 | 1-10 |

☑ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **29 March 2024** | **09 April 2024** |

| Name and mailing address of the ISA/JP | Authorized officer |
| --- | --- |
| **Japan Patent Office (ISA/JP)** **3-4-3 Kasumigaseki, Chiyoda-ku, Tokyo 100-8915** **Japan** | |
| | Telephone No. |

Form PCT/ISA/210 (second sheet) (July 2022)

## INTERNATIONAL SEARCH REPORT

| | International application No. |
|---|---|
| | **PCT/JP2024/003806** |

**C.    DOCUMENTS CONSIDERED TO BE RELEVANT**

| Category* | Citation of document, with indication, where appropriate, of the relevant passages | Relevant to claim No. |
|---|---|---|
| A | US 2020/0226342 A1 (INDUSTRIAL TECHNOLOGY RESEARCH INSTITUTE) 16 July 2020 (2020-07-16)<br>      fig. 1 | 1-10 |

Form PCT/ISA/210 (second sheet) (July 2022)

## INTERNATIONAL SEARCH REPORT
### Information on patent family members

International application No.

**PCT/JP2024/003806**

| Patent document cited in search report | | | Publication date (day/month/year) | Patent family member(s) | Publication date (day/month/year) |
|---|---|---|---|---|---|
| JP | 2017-97334 | A | 01 June 2017 | (Family: none) | |
| JP | 2013-517528 | A | 16 May 2013 | US 2011/0170184 A1 claims 1-3, paragraphs [0002], [0047]-[0113], [0128]-[0131], fig. 1-8 WO 2011/087958 A1 EP 2524256 A1 KR 10-2012-0115541 A CN 102822708 A | |
| JP | 2023-505183 | A | 08 February 2023 | US 2022/0397791 A1 paragraphs [0001], [0067]-[0074], [0079], fig. 1-13 WO 2021/111297 A1 CN 114761836 A KR 10-2022-0110783 A | |
| US | 2020/0226342 | A1 | 16 July 2020 | TW 202026744 A CN 111435213 A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020028981 A
- JP 2020104467 A
- WO 2004113966 A1
- JP 2013254183 A
- JP 2012189802 A
- JP 2001188104 A
- WO 2019151073 A1